# EUROPEAN PATENT APPLICATION

(11) **EP 4 369 765 A1**
(43) Date of publication of application: **15.05.2024**
(21) Application number: 21949313.7
(22) Date of filing: 08.07.2021
(51) Int. Cl.: H04W 16/28, H04W 72/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2021/025713
(87) International publication number: WO 2023/281680

(57) **Abstract**

A terminal according to one aspect of the present disclosure includes: a receiving section that receives indication related to an uplink (UL) transmission scheme; and a control section that switches a transmission scheme to use, to any one of one or more single-panel UL transmission schemes and one or more multi-panel UL transmission schemes, based on the indication. According to one aspect of the present disclosure, it is possible to appropriately switch a transmission scheme.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as 5th generation mobile communication system (5G), 5G+ (plus), 6th generation mobile communication system (6G), New Radio (NR), 3GPP Rel. 15 (or later versions), and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, UL transmission by one or more beams/panels to one or more transmission/reception points (TRPs) is under study. However, details about how to switch a transmission scheme to any one of one or more single-panel UL transmission scheme and one or more multi-panel UL transmission schemes are not clear.

Thus, an object of the present disclosure is to provide a terminal, a radio communication method, and a base station that can appropriately switch a transmission scheme.

### Solution to Problem

A terminal according to one aspect of the present disclosure includes: a receiving section that receives indication related to an uplink (UL) transmission scheme; and a control section that switches a transmission scheme to use, to any one of one or more single-panel UL transmission schemes and one or more multi-panel UL transmission schemes, based on the indication.

### Advantageous Effects of Invention

According to one aspect of the present disclosure, it is possible to appropriately perform simultaneous UL transmission using a plurality of panels.

### Brief Description of Drawings

[FIG. 1] FIG. 1 is a diagram to show an example of associations between a precoder type and a TPMI index.
[FIG. 2] FIGS. 2A and 2B are diagrams to show examples of single-panel UL transmission.
[FIG. 3] FIGS. 3A to 3C are diagrams to show examples of schemes 1 to 3 of simultaneous UL transmission using multi-panel.
[FIG. 4] FIGS. 4A and 4B are diagrams to show examples of PUSCH repetition transmission.
[FIG. 5] FIG. 5A is a diagram to show an example of a DCI field indicating single-TRP/multi-TRP switching in Rel. 17. FIG. 5B is a diagram to show an example of reuse of the DCI field indicating single-TRP/multi-TRP switching in Rel. 17.
[FIG. 6] FIG. 6 is a diagram to show a first example obtained by extending the DCI field indicating single-TRP/multi-TRP switching in Rel. 17.
[FIG. 7] FIG. 7 is a diagram to show a second example obtained by extending the DCI field indicating single-TRP/multi-TRP switching in Rel. 17.
[FIG. 8] FIG. 8 is a diagram to show a third example obtained by extending the DCI field indicating single-TRP/multi-TRP switching in Rel. 17.
[FIG. 9] FIG. 9 is a diagram to show a fourth example obtained by extending the DCI field indicating single-TRP/multi-TRP switching in Rel. 17.
[FIG. 10] FIG. 10 is a diagram to show an example of a multi-panel UL transmission scheme and TDM PUSCH repetition transmission.
[FIG. 11] FIG. 11 is a diagram to show an example of a schematic structure of a radio communication system according to one embodiment.
[FIG. 12] FIG. 12 is a diagram to show an example of a structure of a base station according to one embodiment.
[FIG. 13] FIG. 13 is a diagram to show an example of a structure of a user terminal according to one embodiment.
[FIG. 14] FIG. 14 is a diagram to show an example of a hardware structure of the base station and the user terminal according to one embodiment.

### Description of Embodiments

### (PUSCH Precoder)

For NR, it is studied that a UE supports at least one of codebook (CB) based transmission and non-codebook (NCB) based transmission.

For example, it is studied that the UE judges a precoder (precoding matrix) for at least one of CB based and NCB based uplink shared channel (Physical Uplink Shared Channel (PUSCH)) transmissions by using at least a reference signal for measurement (Sounding Reference Signal (SRS)) resource indicator (SRS Resource Indicator (SRI)).

In a case of CB based transmission, the UE may determine a precoder for the PUSCH transmission, based on an SRI, a transmitted rank indicator (TRI), a transmitted precoding matrix indicator (TPMI), and the like. In a case of NCB based transmission, the UE may determine a precoder for the PUSCH transmission, based on the SRI.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH. The TRI and the TPMI may be specified by precoding information and number of layers field ("Precoding information and number of layers" field) of the DCI.

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence") .

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), and the like.

The UE may determine a precoder to be used for the PUSCH transmission, based on precoder type information (which may be indicated by an RRC parameter "codebookSubset") included in PUSCH configuration information notified by higher layer signaling ("PUSCH-Config" information element of RRC signaling). The UE may be configured with a subset of a PMI specified by the TPMI, by codebookSubset.

Note that the precoder type may be specified by any of or a combination of at least two of full coherent (fully coherent, coherent), partial coherent, and non-coherent (non coherent) (which may be indicated, for example, by a parameter such as "fullyAndPartialAndNonCoherent" or "partialAndNonCoherent."

Full coherent may mean that all the antenna ports to be used for transmission are synchronized (which may be expressed as being able to be matched in terms of phase, having the same precoder to be applied, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and noncoherent. A UE that supports the precoder type, partial coherent, may be assumed to support the precoder type, non-coherent.

The precoder type may be interpreted as coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

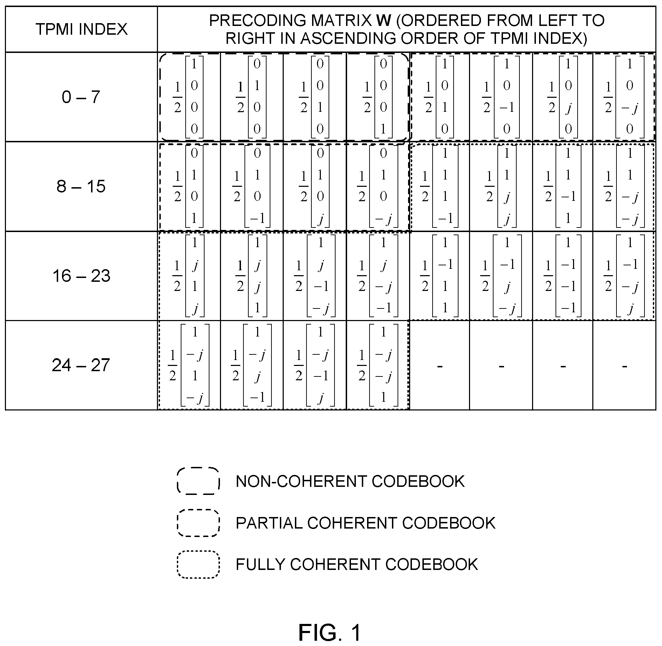

FIG. 1 is a diagram to show an example of associations between a precoder type and a TPMI index. FIG. 1 corresponds to a table of a precoding matrix W for single-layer (rank 1) transmission using four antenna ports by DFT-s-OFDM (Discrete Fourier Transform spread OFDM) (for which transform precoding is enabled).

In FIG. 1, in a case where the precoder type (codebookSubset) is fully and partial and non-coherent (fullyAndPartialAndNonCoherent), the UE is notified of any TPMI among 0 to 27 for single-layer transmission. In a case where the precoder type is partial and non-coherent (partialAndNonCoherent), the UE is configured with any TPMI among 0 to 11 for single-layer transmission. In a case where the precoder type is non-coherent (nonCoherent), the UE is configured with any TPMI among 0 to 3 for single-layer transmission.

Note that, as shown in FIG. 1, a precoding matrix with only one element of each column not being 0 may be referred to as a non-coherent codebook. A precoding matrix with a certain number of (but not all) elements of each column not being 0 may be referred to as a partial coherent codebook. A precoding matrix with all the elements of each column not being 0 may be referred to as a fully coherent codebook.

The non-coherent codebook and the partial coherent codebook may be referred to as antenna selection precoders. The fully coherent codebook may be referred to as a non-antenna selection precoder.

Note that, in the present disclosure, the partial coherent codebook may correspond to codebooks (precoding matrices) each corresponding to a TPMI with which the UE configured with a partial coherent codebook subset (for example, an RRC parameter "codebookSubset" = "partialAndNonCoherent") is specified by DCI for codebook based transmission, excluding codebooks each corresponding to a TPMI with which the UE configured with a non-coherent codebook subset (for example, an RRC parameter "codebookSubset" = "nonCoherent") is specified (in other words, in a case of single-layer transmission with four antenna ports, codebooks with TPMI = 4 to 11).

Note that, in the present disclosure, the fully coherent codebook may correspond to codebooks (precoding matrices) each corresponding to a TPMI with which the UE configured with a fully coherent codebook subset (for example, an RRC parameter "codebookSubset" = "fullyAndPartialAndNonCoherent") is specified by DCI for codebook based transmission, excluding codebooks each corresponding to a TPMI with which the UE configured with a partial coherent codebook subset (for example, an RRC parameter "codebookSubset" = "partialAndNonCoherent") is specified (in other words, in a case of single-layer transmission with four antenna ports, codebooks with TPMI = 12 to 27).

### (Spatial Relations for SRS and PUSCH)

The UE may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of periodic SRS (P-SRS), semi-persistent SRS (SP-SRS), and aperiodic SRS (A-SRS, AP-SRS). Note that the UE may transmit a P-SRS and an SP-SRS periodically (or periodically after activation), and transmit an A-SRS, based on an SRS request in DCI.

The usage (RRC parameter "usage," L1 (Layer-1) parameter "SRS-SetUse") may be, for example, beam management (beamManagement), codebook based transmission (codebook (CB)), non-codebook based transmission (nonCodebook (NCB)), antenna switching (antennaSwitching), or the like. An SRS with usage of codebook based transmission or non-codebook based transmission may be used to determine a precoder for codebook based or non-codebook based PUSCH transmission based on an SRI.

For example, in a case of codebook based transmission, the UE may determine a precoder for the PUSCH transmission, based on an SRI, a transmitted rank indicator (TRI), and a transmitted precoding matrix indicator (TPMI). In a case of non-codebook based transmission, the UE may determine a precoder for the PUSCH transmission, based on the SRI.

The SRS resource information may include an SRS resource ID (SRS-ResourceId), the number of SRS ports, SRS port numbers, transmission Comb, SRS resource mapping (for example, the time and/or frequency resource location, a resource offset, resource periodicity, the number of repetitions, the number of SRS symbols, an SRS bandwidth, and the like), hopping related information, an SRS resource type, a sequence ID, spatial relation information of the SRS, and the like.

The spatial relation information of the SRS (for example, an RRC information element "spatialRelationInfo") may indicate spatial relation information between a certain reference signal and the SRS. The certain reference signal may be at least one of a synchronization signal / broadcast channel (Synchronization Signal / Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of the SRS may include at least one of an SSB index, a CSI-RS resource ID, and an SRS resource ID as an index of the certain reference signal.

Note that, in the present disclosure, an SSB index, an SSB resource ID, and an SSBRI (SSB Resource Indicator) may be interchangeably interpreted. A CSI-RS index, a CSI-RS resource ID, and a CRI (CSI-RS Resource Indicator) may be interchangeably interpreted. An SRS index, an SRS resource ID, and an SRI may be interchangeably interpreted.

The spatial relation information of the SRS may include a serving cell index, a BWP index (BWP ID), and the like corresponding to the certain reference signal.

In NR, transmission of an uplink signal may be controlled based on the presence of beam correspondence (BC). BC may be a capability of a certain node (for example, the base station or the UE) to determine a beam (transmit beam, Tx beam) to be used for transmission of a signal, based on a beam (receive beam, Rx beam) used for reception of the signal, for example.

Note that the BC may be referred to as transmit/receive beam correspondence (Tx/Rx beam correspondence), beam reciprocity, beam calibration, calibrated/non-calibrated, reciprocity calibrated/non-calibrated, correspondence degree, matching degree, and the like.

For example, in a case without BC, the UE may use the same beam (spatial domain transmission filter) as that of an SRS (or an SRS resource) indicated by the base station, based on a measurement result of one or more SRSs (or SRS resources), to transmit an uplink signal (for example, a PUSCH, a PUCCH, an SRS, or the like).

In contrast, in a case with BC, the UE may use the same or a corresponding beam (spatial domain transmission filter) as or to that of a beam (spatial domain reception filter) used for reception of a certain SSB or CSI-RS (or CSI-RS resource), to transmit an uplink signal (for example, a PUSCH, a PUCCH, an SRS, or the like).

When the UE is configured with spatial relation information related to an SSB or a CSI-RS and an SRS for a certain SRS resource (for example, in a case with BC), the UE may transmit the SRS resource by using the same spatial domain filter (spatial domain transmission filter) as a spatial domain filter for reception (spatial domain reception filter) of the SSB or CSI-RS. In this case, the UE may assume that the UE receive beam for the SSB or CSI-RS and a UE transmit beam for the SRS may be the same.

When the UE is configured, for a certain SRS (target SRS) resource, with spatial relation information related to another SRS (reference SRS) and the SRS (target SRS) (for example, in a case without BC), the UE may transmit the target SRS resource by using the same spatial domain filter (spatial domain transmission filter) as a spatial domain filter for transmission (spatial domain transmission filter) of the reference SRS. In other words, in this case, the UE may assume that the UE transmit beam for the reference SRS and a UE transmit beam for the target SRS may be the same.

The UE may determine, based on the value of a certain field (for example, an SRS resource indicator (SRI) field) in DCI (for example, DCI format 0_1), a spatial relation of a PUSCH scheduled by the DCI. Specifically, the UE may use spatial relation information (for example, an RRC information element "spatialRelationInfo") of the SRS determined based on the value of the certain field (for example, the SRI), for PUSCH transmission.

In a case of using codebook based transmission for the PUSCH, the UE may be configured with two SRS resources by RRC and indicated with one of the two SRS resources by DCI (certain one-bit field). In a case of using non-codebook based transmission for the PUSCH, the UE may be configured with four SRS resources by RRC and indicated with one of the four SRS resources by DCI (certain two-bit field). To use a spatial relation other than the two or four spatial relations configured by RRC, RRC reconfiguration is needed.

Note that a DL-RS can be configured for a spatial relation of an SRS resource to be used for a PUSCH. For example, for an SP-SRS, the UE can be configured with spatial relations of a plurality of (for example, up to 16) SRS resources by RRC and indicated with one of the plurality of SRS resources by a MAC CE.

### (Single-panel/Multi-panel Transmission)

### <Transmission Schemes>

A single-panel UL transmission scheme or a candidate for a single-panel UL transmission scheme may be at least one of schemes A and B (single-panel UL transmission schemes A and B) below. A multi-panel UL transmission scheme or a candidate for a multi-panel UL transmission scheme may be at least one of schemes 1 to 3 (multi-panel UL transmission schemes 1 to 3) below. Only one of schemes A, B, and 1 to 3 may be supported. A plurality of schemes including at least one of schemes A, B, and 1 to 3 may be supported, and one of the plurality of schemes may be configured for the UE. UL in the present disclosure may be a PUSCH, for example.

### «Scheme A»

### Single-panel Single-TRP UL Transmission

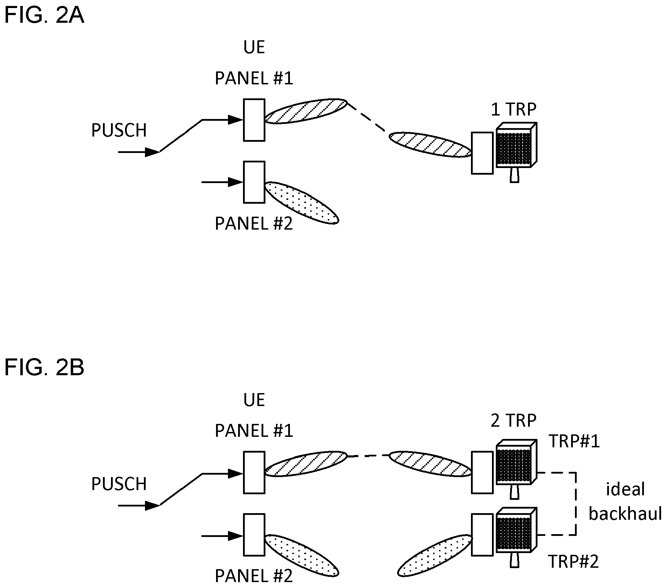

In Rel. 15 and Rel. 16, a scheme in which a UE transmits UL to one TRP from only one beam and panel at one time point is used (FIG. 2A).

### <<Scheme B>>

### Single-panel Multi-TRP UL Transmission

For Rel. 17, it is studied to perform UL transmission from only one beam and panel at one time point and perform repetition transmission to a plurality of TRPs (FIG. 2B). In the example in FIG. 2B, the UE transmits a PUSCH from panel #1 to TRP #1 and thereafter (after switching the beam and the panel) transmits a PUSCH from panel #2 to TRP #2. The two TRPs are connected to each other via an ideal backhaul.

### «Scheme 1»

### Coherent Multi-panel UL Transmission

A plurality of panels may be synchronized with each other. All layers are mapped to all the panels. A plurality of analog beams are indicated. An SRS resource indicator (SRI) field may be extended. This scheme may use four layers at maximum for UL.

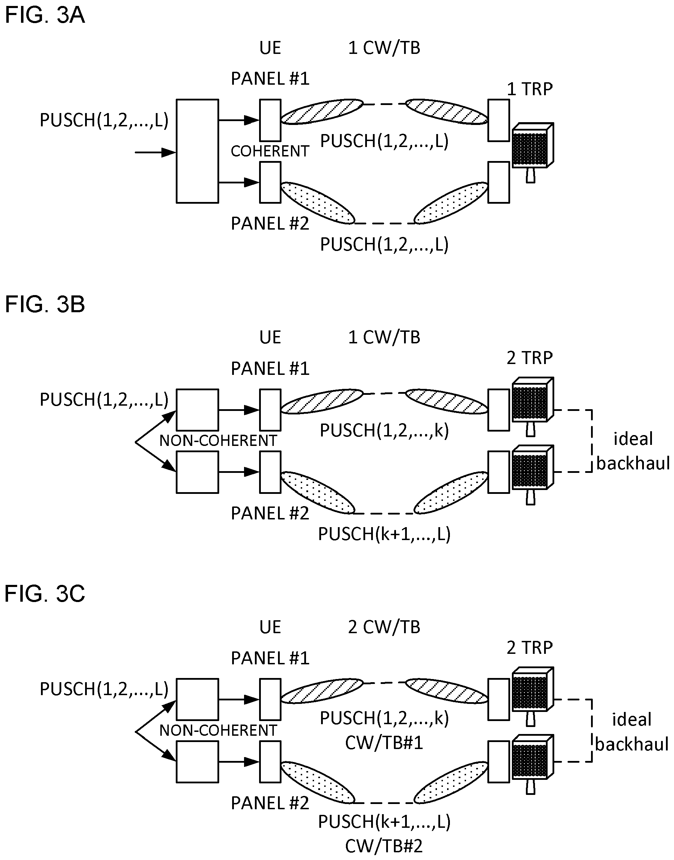

In the example in FIG. 3A, the UE maps one codeword (CW) or one transport block (TB) to L layers (PUSCHs (1, 2, ..., L)) and transmits the L layers from each of the two panels. Panel #1 and panel #2 are coherent. Scheme 1 can obtain gain by diversity. The total number of layers in the two panels is 2L. In a case where the maximum total number of layers is four, the maximum number of layers per panel is two.

### <<Scheme 2»

### Non-coherent Multi-panel UL Transmission of One Codeword (CW) or Transport Block (TB)

A plurality of panels need not be synchronized with each other. Different layers are mapped to different panels and one CW or TB for PUSCHs from the plurality of panels. The layers corresponding to the one CW or TB may be mapped to the plurality of panels. This scheme may use four layers or eight layers at maximum for UL. In a case of supporting eight layers at maximum, this scheme may support one CW or TB using eight layers at maximum.

In the example in FIG. 3B, the UE maps one CW or one TB to k layers (PUSCHs (1, 2, ..., k)) and L - k layers (PUSCHs (k + 1, k + 2, ..., L)), and transmits k layers from panel #1 while transmitting L - k layers from panel #2. Scheme 2 can obtain gain by multiplexing and diversity. The total number of layers in the two panels is L.

### «Scheme 3»

### Non-coherent Multi-panel UL Transmission of Two CWs or TBs

A plurality of panels need not be synchronized with each other. Different layers are mapped to different panels and two CWs or TBs for PUSCHs from the plurality of panels. The layers corresponding to one CW or TB may be mapped to one panel. The layers corresponding to a plurality of CWs or TBs may be mapped to different panels. This scheme may use four layers or eight layers at maximum for UL. In a case of supporting eight layers at maximum, this scheme may support four layers at maximum per CW or TB.

In the example in FIG. 3C, the UE maps CW #1 or TB #1 of two CWs or two TBs to k layers (PUSCHs (1, 2, ..., k)) while mapping CW #2 or TB #2 to L - k layers (PUSCHs (k + 1, k + 2, ..., L)), and transmits k layers from panel #1 and transmitting L - k layers from panel #2. Scheme 3 can obtain gain by multiplexing and diversity. The total number of layers in the two panels is L.

In each of the above-described schemes, the base station may configure or indicate panel-specific transmission for UL transmission by using UL TCI or a panel ID. The UL TCI (UL TCI state) may be based on signaling similar to DL beam indication supported in Rel. 15. A panel ID may be implicitly or explicitly applied to transmission of at least one of a target RS resource or a target RS resource set, a PUCCH, an SRS, and a PRACH. In a case where the panel ID is explicitly notified, the panel ID may be configured in at least one of a target RS, a target channel, and a reference RS (for example, a DL RS resource configuration or spatial relation information).

### <Differentiation between Transmission Schemes>

Single-panel UL transmission schemes (for example, Rel. 15 or Rel. 16) A and B and at least one of multi-panel UL transmission (for example, Rel. 17) schemes 1 to 3 may be differentiated (switched) by any one of method 1 and method 2 below.

### <<Method 1»

Which one of schemes is to be used may be explicitly notified (configured, indicated) by at least one of RRC signaling, a MAC CE, and DCI.

### <<Method 2»

Which one of schemes is to be used may be implicitly notified (configured, indicated) by at least one of RRC signaling, a MAC CE, and DCI. The UE may determine a UL transmission scheme, based on at least one of conditions 1 to 6 below.

### {Condition 1}

If the UE is notified that one SRI index corresponds to two SRS resource indications, that two pieces of spatial relation information are configured for one SRS resource, or that reference signals of two different types of QCL are configured for one piece of spatial relation information, the UE may regard that a multi-panel UL transmission scheme (scheme 1, 2, or 3) is used instead of single-panel transmission schemes A and B.

### {Condition 2}

If a plurality of SRI fields are present in DCI, the UE may regard that a multi-panel UL transmission scheme (scheme 1, 2, or 3) is used.

### {Condition 3}

If a new table (PHY table) for SRS resource indication is configured, the UE may regard that a multi-panel UL transmission scheme (scheme 1, 2, or 3) is used.

### {Condition 4}

If precoding information with two layer indications per index and a new table (PHY table) for the number of layers field are configured, the UE may regard that a multi-panel UL transmission scheme 2 or 3 is used.

### {Condition 5}

If precoding information with at least one of two layer indications and two TPMI indications per index and a new table (PHY table) for the number of layers field are configured, the UE may regard that a multi-panel UL transmission scheme 3 is used.

### {Condition 6}

If DCI includes a plurality of MCS fields or a plurality of "precoding information and number of layers" fields, the UE may regard that a multi-panel UL transmission scheme 3 is used.

### (PUSCH Repetition Transmission)

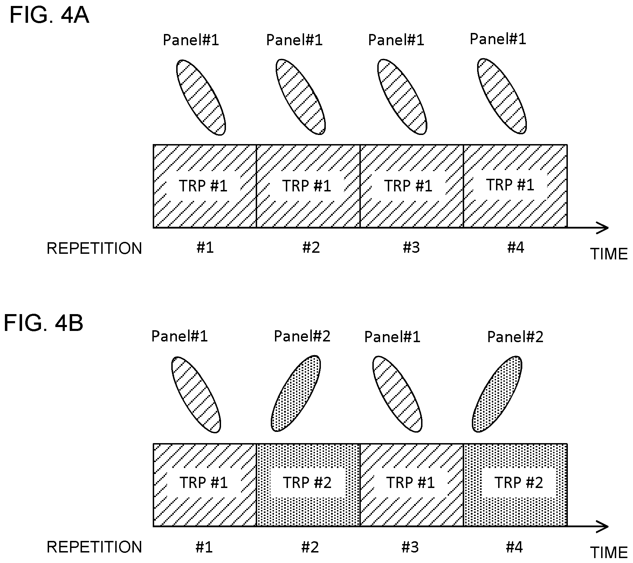

FIG. 4A is a diagram to show an example of PUSCH repetition transmission to a single TRP. In the example shown in FIG. 4A, the UE uses the same SRI / TPMI / power control parameter (parameter set) to perform a plurality of PUSCH repetition transmissions (#1 to #4) to the single TRP.

FIG. 4B is a diagram to show an example of PUSCH repetition transmission to multi-TRP. In the example shown in FIG. 4B, the UE uses a first SRI / TPMI / power control parameter (parameter set) corresponding to TRP #1 in PUSCH repetition transmissions (#1 and #3) and uses a second SRI / TPMI / power control parameter (parameter set) corresponding to TRP #2 in PUSCH repetition transmissions (#2 and #4). In other words, the UE may use different SRIs / TPMIs / power control parameters (parameter sets) for a plurality of PUSCH repetition transmissions.

In PUSCH repetition transmission using TDM as in FIGS. 4A and 4B, the number K of repetitions may be determined by using any one of (1) to (3) below.

(1) When a specific RRC parameter (for example, numberOfRepetitions-r16) is present in a resource allocation table, the number K of repetitions may be the same as the specific RRC parameter.
(2) When (1) does not apply and the UE is configured with another RRC parameter (for example, pusch-AggregationFactor), the number K of repetitions may be the same as such other RRC parameter.
(3) When (1) and (2) do not apply, a specific value (for example, 1) may be applied to the number K of repetitions.

### (Issues)

As mentioned above, for future radio communication systems, UL transmission by one or more beams/panels to one or more TRPs is under study. However, details about how to switch a transmission scheme to any one of one or more single-panel UL transmission schemes (for example, schemes A and B) and one or more multi-panel UL transmission schemes (for example, schemes 1 to 3) are not clear. For example, when a plurality of single-panel UL transmission schemes and a plurality of multi-panel UL transmission schemes are supported, how to switch the transmission schemes is not clear. Unless a transmission schemes is not switched appropriately, an issue such as decrease in throughput may occur.

Thus, the inventors of the present invention came up with the idea of a method possible to appropriately switch a transmission scheme.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), and an RRC message may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a MAC CE and an activation/deactivation command may be interchangeably interpreted.

In the present disclosure, a panel, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state or QCL assumption, an RS of QCL type A in a TCI state / QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a DL-RS source, an SSB, a CSI-RS, and an SRS may be interchangeably interpreted.

In the present disclosure, a panel, an Uplink (UL) transmission entity, a TRP, a spatial relation, a control resource set (CORESET), a PDSCH, a codeword, a base station, an antenna port for a certain signal (for example, a demodulation reference signal (DMRS) port), an antenna port group for a certain signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (MIMO layer, transmission layer, spatial layer) may be interchangeably interpreted. A panel Identifier (ID) and a panel may be interchangeably interpreted. In the present disclosure, a TRP ID, a TRP related ID, a CORESET pool index, the location of one TCI state of two TCI states corresponding to one codepoint in a field in DCI (ordinal number, first TCI state or second TCI state), and TRP may be interchangeably interpreted.

In the present disclosure, a panel, a UE panel, an RS port group, a DMRS port group, an SRS port group, an RS resource group, a DMRS resource group, an SRS resource group, a beam group, a TCI state group, a spatial relation group, an SRS resource indicator (SRI) group, an antenna port group, an antenna group, and a CORESET group may be interchangeably interpreted.

A panel may be associated with at least one of a panel ID, a UL TCI state, a UL beam, a L beam, a DL RS resource, and spatial relation information.

In the present disclosure, multi-TRP, a multi-TRP system, multi-TRP transmission, multi-PDSCH, a channel using multi-TRP, a channel using a plurality of TCI states / spatial relations, multi-TRP being enabled by RRC/DCI, a plurality of TCI states / spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted. In the present disclosure, multi-TRP based on single DCI and at least one codepoint in a TCI field being mapped to two TCI states may be interchangeably interpreted.

In the present disclosure, a single TRP, single DCI, a single PDCCH, multi-TRP based on single DCI, a single-TRP system, single-TRP transmission, a single PDSCH, a channel using a single TRP, a channel using one TCI state / spatial relation, multi-TRP being not enabled by RRC/DCI, a plurality of TCI states / spatial relations being not enabled by RRC/DCI, one CORESET pool index (CORESETPoolIndex) value being not configured for any CORESET and any codepoint of a TCI field being not mapped to two TCI states, and two TCI states of at least one TCI codepoint being activated may be interchangeably interpreted.

In the present disclosure, "Rel. 17," "Rel. 17 or later versions," and "future radio communication systems" may be interchangeably interpreted. In the present disclosure, "switch," "determine," and "select" may be interchangeably interpreted.

### (Radio Communication Method)

### <First Embodiment>

A UE may receive indication/configuration related to a UL transmission scheme by at least one of RRC, a MAC CE, and DCI and switch a transmission scheme to use, to any one of one or more single-panel UL transmission schemes (for example, transmission schemes A and B) and one or more multi-panel UL transmission schemes (for example, transmission schemes 1 to 3), based on the indication/configuration. For example, any one of RRC, a MAC CE, and DCI may be used for the indication/configuration, or a combination of two or three of RRC, a MAC CE, and DCI may be used for the indication/configuration.

In the present disclosure, the transmission scheme may mean at least one of one or more single-panel UL transmission schemes and one or more multi-panel UL transmission schemes. The one or more single-panel UL transmission schemes may mean at least one of schemes A and B described above. The one or more multi-panel UL transmission schemes may mean at least one of schemes 1 to 3 described above, for example. The UE being indicated/configured with a transmission scheme and the UE switching a transmission scheme may be interchangeably interpreted.

The UE may switch a transmission scheme, based on at least one of RRC, a MAC CE, report of a panel activation state by the UE, report of the number of panels by the UE, and report of capability information related to a panel/transmission scheme by the UE, for example.

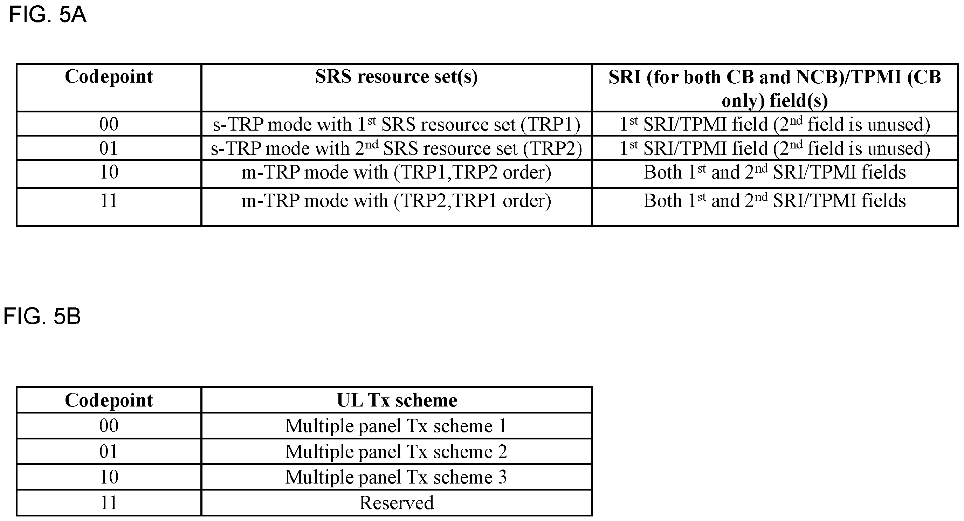

The UE may switch a transmission scheme to any one of the one or more single-panel UL transmission schemes according to received DCI, for example. For example, in the DCI, a field similar to a field to be used for single-TRP/multi-TRP switching in Rel. 17 (for example, refer to FIG. 5A to be described below) may be used. For example, the UE may apply scheme A when a single TRP is indicated in the DCI while applying scheme B when multi-TRP is indicated.

The UE may switch a transmission scheme to any one of the one or more multi-panel UL transmission schemes, based on received DCI, for example.

The UE may be semi-statically configured with one of the one or more multi-panel UL transmission schemes by RRC / a MAC CE and dynamically switch between the multi-panel UL transmission scheme thus semi-statically configured and one of the one or more single-panel UL transmission schemes according to DCI. Alternatively, the UE may be semi-statically configured with one of the one or more single-panel UL transmission schemes by RRC / a MAC CE and dynamically switch between the single-panel UL transmission scheme thus semi-statically configured and one of the one or more multi-panel UL transmission schemes according to DCI.

The UE may be configured with a plurality of UL transmission schemes (transmission scheme candidates) by RRC / a MAC CE and indicated with one of the plurality of UL transmission schemes by DCI. Alternatively, the UE may be configured with a plurality of UL transmission schemes (transmission scheme candidates) by RRC at least one of which is then activated by a MAC CE, and indicated with one of the activated UL transmission scheme(s) by DCI.

### <<Switching of Transmission Scheme Using DCI>>

Switching of a transmission scheme using DCI will be described in detail. The UE may receive DCI indicating at least one of the one or more single-panel UL transmission schemes and the one or more multi-panel UL transmission schemes and switch the transmission scheme to use, based on one or a plurality of fields in the DCI. The DCI may support only part of the plurality of transmission schemes.

### {Option 1}

One field of the DCI may be used for indication of a UL transmission scheme. The UE may switch the transmission scheme to use, based on the one field of the DCI. For example, although the one field of the DCI is used, interpretation of the field may be different for each configuration of higher layer signaling. For example, when a single panel is configured by higher layer signaling, the field of the DCI indicates one UL transmission scheme among the one or more single-panel UL transmission schemes. For example, when multi-panel is configured by higher layer signaling, the field of the DCI indicates one UL transmission scheme among the one or more multi-panel UL transmission schemes.

Depending on configuration by higher layer signaling, a different field in the DCI may be used for indication of a UL transmission scheme. Depending on configuration by higher layer signaling, whether a field indicating a UL transmission scheme is present or absent in the DCI may be indicated.

For example, when multi-panel is configured by higher layer signaling, a field "X" of the DCI may be present to indicate one UL transmission scheme among the one or more multi-panel UL transmission schemes while a field "Y" of the DCI may not be present. When a single panel is configured by higher layer signaling, the field "Y" of the DCI may be present to indicate one UL transmission scheme among the one or more single-panel UL transmission schemes while the field "X" of the DCI may not be present.

### {Option 2}

A plurality of fields of the DCI may be used for indication of a UL transmission scheme. The UE may switch the transmission scheme to use, based on the plurality of fields of the DCI. One field may indicate one subset (group) of transmission schemes, and another DCI field may indicate one in the subset of the transmission schemes. For example, one DCI field "X" may indicate either the single-panel UL transmission schemes or the multiple-panel UL transmission schemes, and another DCI field "Y" may indicate one of the single-panel UL transmission schemes or one of the multi-panel UL transmission schemes.

For example, the field of the DCI indicating a UL transmission scheme may be a new DCI field, a reuse/extension of a DCI field in Rel. 16/17 (for example, DCI field indicating single-TRP/multi-TRP switching in multi-TRP in Rel. 17), or a reserved/non-used codepoint in a DCI field in Rel. 16/17.

Alternatively, a UL transmission scheme may be implicitly indicated by using information indicated by a field of DCI in Rel. 16/17/18 (for example, at least one of the number of SRI indications, the number of TPMI indications, the number of rank indicators (RIs) indicated by an SRI field / TPMI field). For example, when the number of these is one, this may mean a UL transmission scheme using a single TRP. When the number of these is two, this may mean a UL transmission scheme using multi-TRP.

FIG. 5A is a diagram to show an example of a DCI field indicating single-TRP/multi-TRP switching in Rel. 17. When a single panel is configured/indicated for the UE, the codepoint of a specific field of DCI corresponds to an SRS resource set(s) and an SRI/TPMI(s) as shown in FIG. 5A.

FIG. 5B is a diagram to show an example of reuse of the DCI field indicating single-TRP/multi-TRP switching in Rel. 17. When multi-panel is configured/indicated for the UE, the codepoint of a specific field of DCI may correspond to a UL transmission scheme (UL Tx scheme) as shown in FIG. 5B.

For example, configuration/indication of a single panel or multi-panel is configured in advance by another field of the DCI, higher layer signaling, or the like (for example, RRC or a MAC CE), and either one of the tables in FIG. 5A and FIG. 5B is applied to the specific field of the DCI according to the configuration/indication. According to the example in FIG. 5A / FIG. 5B, by reusing an existing field, a UL transmission scheme can be configured/indicated without using a new field.

Alternatively, a new field indicating a UL transmission scheme may be added to the DCI. For example, codepoints for multi-panel defined as in FIG. 5B may be added to the fields of the DCI, separately from codepoints for a single panel defined as in FIG. 5A.

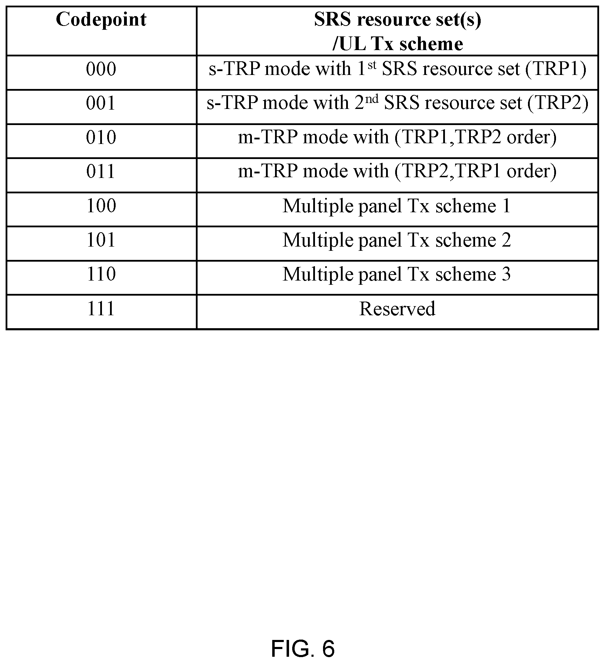

FIG. 6 is a diagram to show a first example obtained by extending the DCI field indicating single-TRP/multi-TRP switching in Rel. 17. FIG. 6 is different from FIG. 5A / FIG. 5B in that each codepoint is of three bits and indication for a single panel and indication for multi-panel are included in one table. The table in FIG. 6 may include the SRI/TPMI field as that in FIG. 5A. In FIG. 6, codepoints "100," "101," and "110" indicate multi-panel transmission schemes (multi-panel UL transmission schemes), and a codepoint "111" indicates a reserved area (Reserved).

According to the example in FIG. 6, it is possible to indicate a single-panel/multi-panel UL transmission scheme and dynamically switch a transmission scheme, without adding a new field. For example, when a specific configuration is made by higher layer signaling, this field may be used.

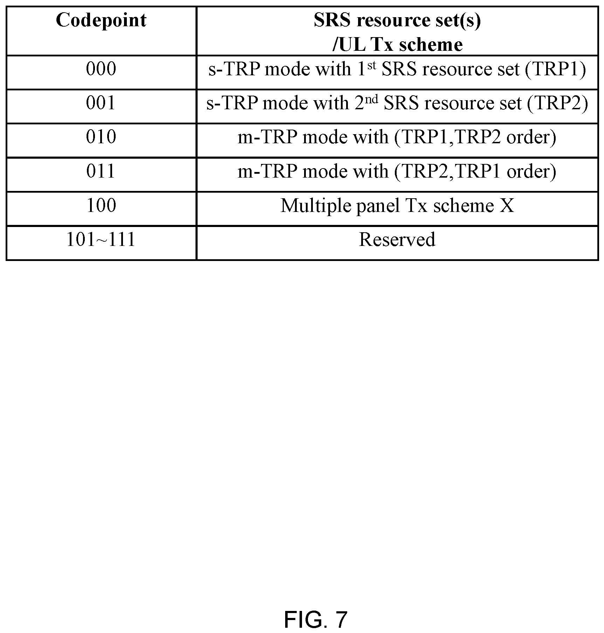

FIG. 7 is a diagram to show a second example obtained by extending the DCI field indicating single-TRP/multi-TRP switching in Rel. 17. FIG. 7 is different from the example in FIG. 6 in that the number of codepoints indicating a multi-panel UL transmission scheme is only one ("100"). In this case, one of the plurality of multi-panel UL transmission schemes is configured in advance by higher layer signaling or the like (for example, RRC / a MAC CE), and the UE uses, when a codepoint indicating a multi-panel UL transmission scheme is indicated by DCI, the transmission scheme configured in advance. According to the example in FIG. 7, the number of codepoints used in DCI fields can be suppressed.

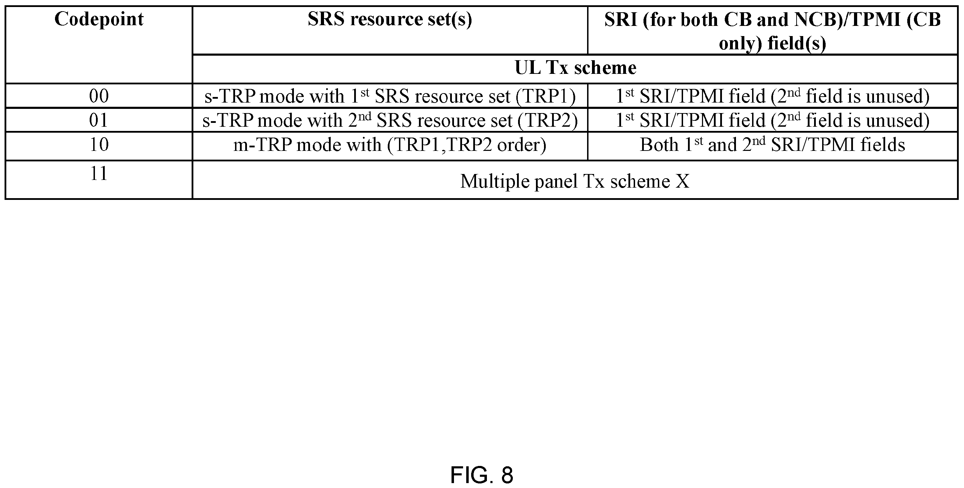

FIG. 8 is a diagram to show a third example obtained by extending the DCI field indicating single-TRP/multi-TRP switching in Rel. 17. In the example in FIG. 8, a codepoint "11" indicates a multi-panel UL transmission scheme. As in the example in FIG. 7, one of the plurality of multi-panel UL transmission schemes may be configured in advance by higher layer signaling or the like (for example, RRC / a MAC CE). Codepoints "00," "01," and "10" may indicate single-panel UL transmission schemes. In the example in FIG. 8, "m-TRP mode with (TRP2, TRP1 order)" is omitted as configuration of an SRS resource set. Note that "m-TRP mode with (TRP1, TRP2 order)" may be omitted and "m-TRP mode with (TRP2, TRP1 order)" may be used.

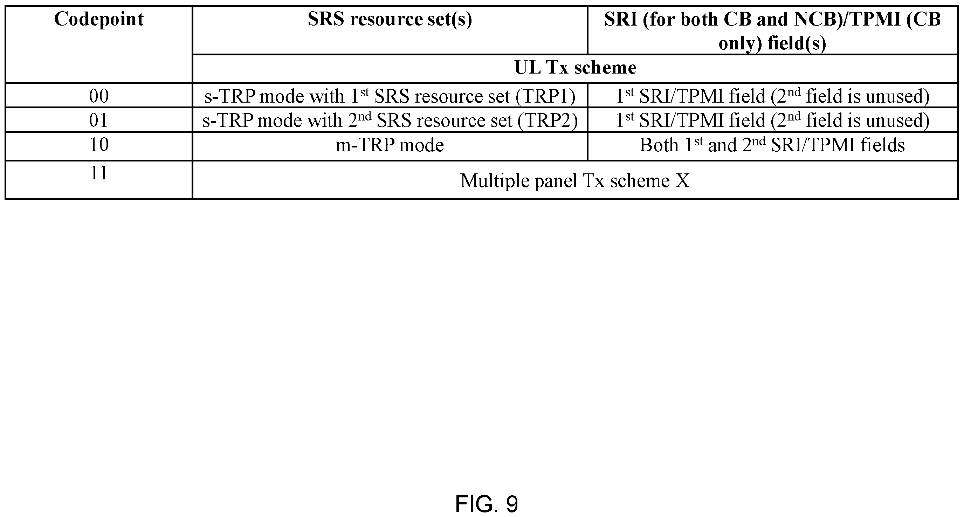

FIG. 9 is a diagram to show a fourth example obtained by extending the DCI field indicating single-TRP/multi-TRP switching in Rel. 17. The example in FIG. 9 is different from the example in FIG. 8 in that configuration of an SRS resource set in a case of multi-TRP is "m-TRP mode." In this case, whether to be "(TRP1, TRP2 order)" or "(TRP2, TRP1 order)" may be semi-statically configured for the UE in advance by higher layer signaling or the like (for example, RRC / a MAC CE). Note that "(TRP1, TRP2 order)" indicates that TRP #1 and TRP #2 transmit PUSCHs in this order (for example, FIG. 4B). "(TRP2, TRP1 order)" indicates that TRP #2 and TRP #1 transmit PUSCHs in this order.

In the examples in FIG. 8 and FIG. 9, it is possible to use a two-bit codepoint to indicate a single-panel UL transmission scheme / multi-panel UL transmission scheme. In other words, it is possible to indicate a UL transmission scheme without increasing the number of bits of a codepoint.

### <Second Embodiment>

Description will be given of whether a multi-panel UL transmission scheme (for example, scheme 1/2/3) is configured/indicated simultaneously with TDM PUSCH repetition transmission (the number of repetitions is larger than 1) in PUSCH transmission. The UE receives configuration/indication related to the multi-panel UL transmission scheme and the PUSCH repetition transmission by DCI / higher layer signaling (for example, RRC / a MAC CE) or the like, and carries out at least one of the multi-panel UL transmission scheme and the PUSCH repetition transmission, based on the configuration/indication. TDM PUSCH repetition transmission in the present disclosure may mean repetition transmission having the number of repetitions being larger than 1. A multi-panel UL transmission scheme in each of aspects 2-1 and 2-2 may indicate scheme 1, while a multi-panel UL transmission scheme in aspect 2-3 may indicate scheme 2 or scheme 3.

### {Aspect 2-1}

The UE need not assume to be configured/indicated with a multi-panel UL transmission scheme and TDM PUSCH repetition transmission, for a PUSCH.

### {Aspect 2-2}

The UE may be configured/indicated with a multi-panel UL transmission scheme and TDM PUSCH repetition transmission, for a PUSCH. Note that the UE may carry out one of the multi-panel UL transmission scheme and the TDM PUSCH repetition transmission.

### {{Option 2-2-1}}

According to initial configuration, the UE may carry out the multi-panel UL transmission scheme while ignoring the configuration/indication of the TDM PUSCH repetition transmission (regarding a repetition number as 1 in some cases). In other words, the UE need not carry out the TDM PUSCH repetition transmission.

### {{Option 2-2-2}}

According to initial configuration, the UE may carry out the TDM PUSCH repetition transmission while ignoring the configuration/indication of the multi-panel UL transmission scheme. In other words, the UE need not carry out the multi-panel UL transmission scheme.

In this case, the UE may carry out single-TRP PUSCH repetition transmission in Rel. 16 (for example, scheme A). Alternatively, the UE may carry out multi-TRP PUSCH repetition transmission in Rel. 17 (for example, scheme B). Single-TRP or multi-TRP PUSCH repetition transmission may be indicated (switched) based on a similar configuration to a field for single-TRP/multi-TRP switching of DCI in Rel. 17 (for example, FIG. 5A).

### {Aspect 2-3}

The UE may be configured/indicated with a multi-panel UL transmission scheme and TDM PUSCH repetition transmission, for a PUSCH. In other words, a multi-panel UL transmission scheme may be applied in PUSCH repetition transmission.

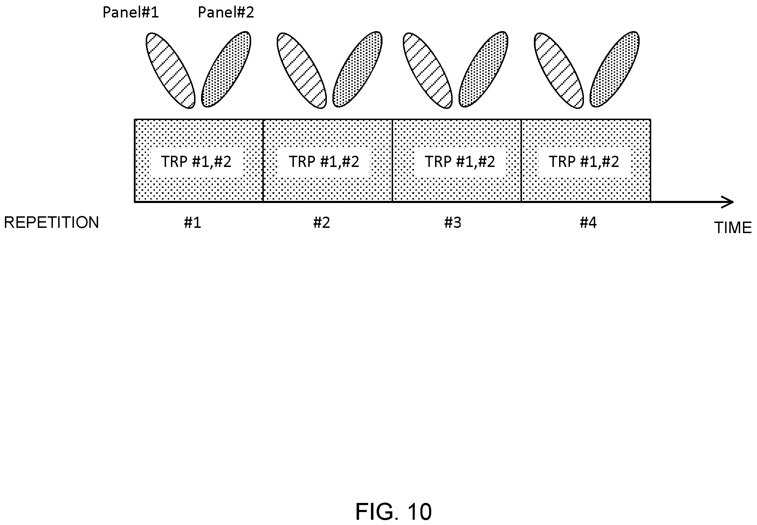

FIG. 10 is a diagram to show an example of a multi-panel UL transmission scheme and TDM PUSCH repetition transmission. As shown in FIG. 10, repetition transmissions (#1 to #4) from a plurality of panels (panel #1, panel #2) to a plurality of TRPs (TRP #1 and TRP #2) are carried out.

According to the present embodiment, it is made clear whether a multi-panel UL transmission scheme is carried out simultaneously with TDM PUSCH repetition transmission.

### <UE Capability>

The UE may transmit (report) UE capability information indicating whether to support at least one of the processes in the present disclosure, to the network (base station). For example, UE capability information indicating at least one of (1) to (4) below may be transmitted. Higher layer signaling configuring at least one of (1) to (4) below may be received. When (1) to (4) below are configured by higher layer signaling, "support" may be interpreted as "carry out."

(1) Whether to support PUSCH multi-panel UL transmission scheme 1/2/3.
(2) Whether to support dynamic switching (DCI based switching) between any two of the multi-panel UL transmission schemes 1/2/3. In this case, different capability information may be transmitted for each scheme.
(3) Whether to support dynamic switching (DCI based switching) between a multi-panel UL transmission scheme (scheme 1/2/3) and a single-panel UL transmission scheme (scheme A/B). In this case, different capability information may be transmitted for each scheme.
(4) Whether to support a combination of a multi-panel UL transmission scheme (scheme 1/2/3) and TDM repetition transmission (multi-panel UL transmission scheme in repetition transmission). In this case, different capability information may be transmitted for each scheme.

The UE may receive information indicating/configuring at least one of the processes in the present disclosure by DCI / higher layer signaling (for example, RRC / a MAC CE) or the like. The information may correspond to the UE capability information transmitted from the UE. Each of the processes in the present disclosure may be applied only in at least one of the cases where UE capability corresponding to the process is supported for the UE and where configuration/indication corresponding to the process is performed by DCI / higher layer signaling or the like.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

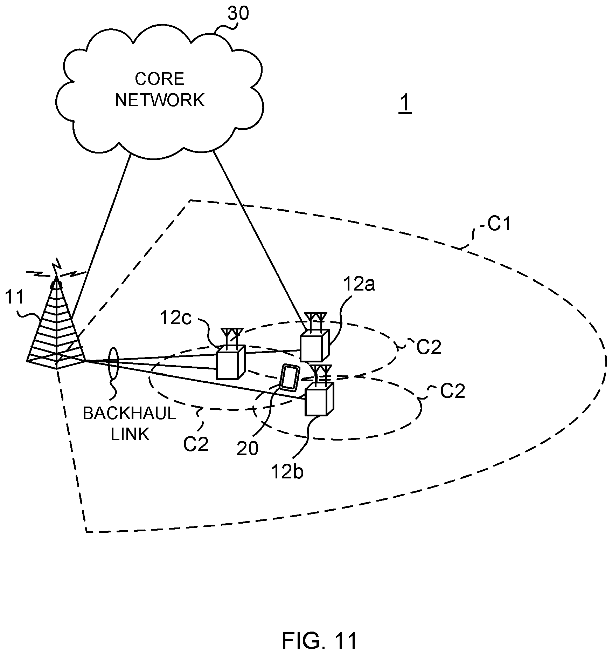

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

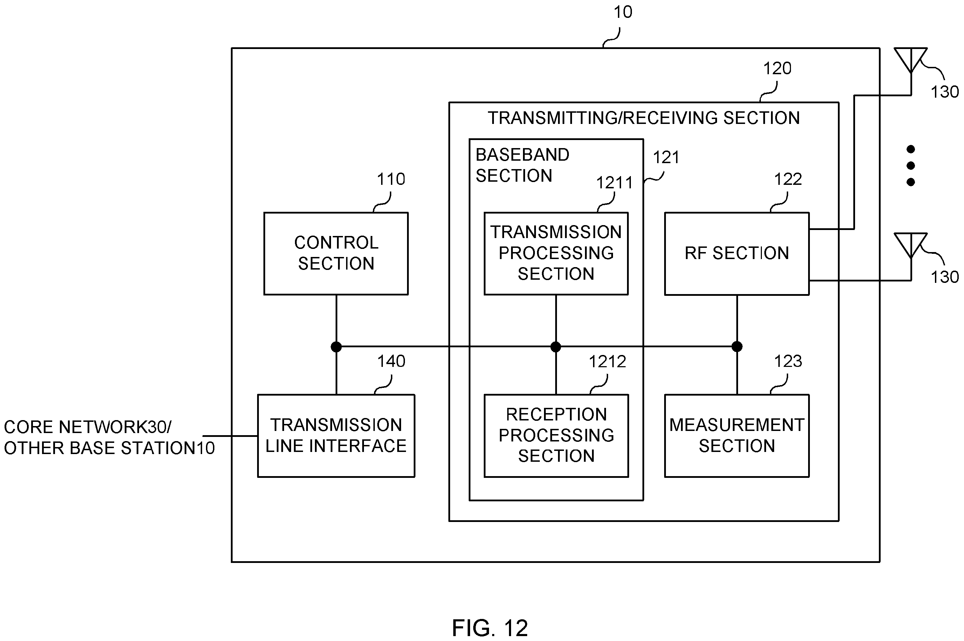

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit indication related to an uplink (UL) transmission scheme.

The control section 110 may control, after a transmission scheme used by a terminal is switched to any one of one or more single-panel UL transmission schemes and one or more multi-panel UL transmission schemes, reception of a UL signal using the transmission scheme, based on the indication transmitted from the transmitting/receiving section 120.

### (User Terminal)

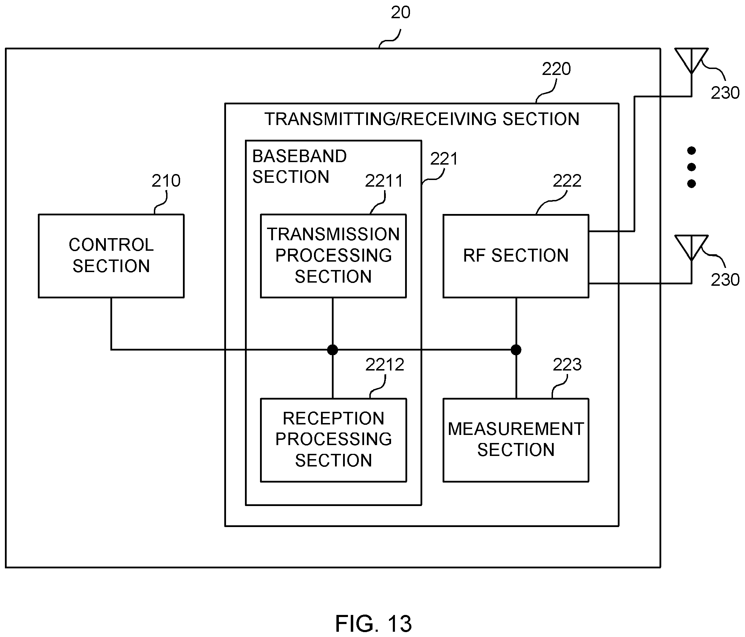

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive indication related to an uplink (UL) transmission scheme.

The control section 210 may switch a transmission scheme to use, to any one of one or more single-panel UL transmission schemes and one or more multi-panel UL transmission schemes, based on the indication received by the transmitting/receiving section 220.

One of the one or more multi-panel UL transmission schemes may be semi-statically configured by Radio Resource Control (RRC) signaling or a Medium Access Control Control Element (MAC CE), and the control section 210 may dynamically switch between the multi-panel UL transmission scheme thus semi-statically configured and one of the one or more single-panel UL transmission schemes, according to Downlink Control Information (DCI).

The transmitting/receiving section 220 may receive DCI indicating at least one of the one or more single-panel UL transmission schemes and the one or more multi-panel UL transmission schemes. The control section 210 may switch the transmission scheme to use, based on one or a plurality of fields of the DCI.

The transmitting/receiving section 220 may receive a configuration related to the multi-panel UL transmission scheme and Physical Uplink Shared Channel (PUSCH) repetition transmission. The control section 210 may carry out at least one of the multi-panel UL transmission scheme and the PUSCH repetition transmission, based on the configuration.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

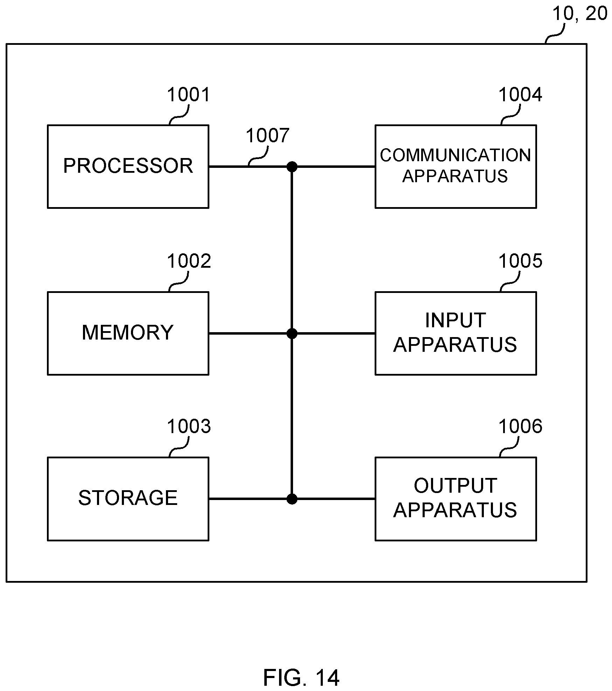

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to -13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives indication related to an uplink (UL) transmission scheme; and
a control section that switches a transmission scheme to use, to any one of one or more single-panel UL transmission schemes and one or more multi-panel UL transmission schemes, based on the indication.

2. The terminal according to claim 1, wherein
one of the one or more multi-panel UL transmission schemes is semi-statically configured by Radio Resource Control (RRC) signaling or a Medium Access Control Control Element (MAC CE), and the control section dynamically switches between the multi-panel UL transmission scheme thus semi-statically configured and one of the one or more single-panel UL transmission schemes, according to Downlink Control Information (DCI).

3. The terminal according to claim 1, wherein
the receiving section receives DCI indicating at least one of the one or more single-panel UL transmission schemes and the one or more multi-panel UL transmission schemes, and
the control section switches the transmission scheme to use, based on one or a plurality of fields in the DCI.

4. The terminal according to any one of claims 1 to 3, wherein
the receiving section receives a configuration related to the multi-panel UL transmission scheme and Physical Uplink Shared Channel (PUSCH) repetition transmission, and
the control section carries out at least one of the multi-panel UL transmission scheme and the PUSCH repetition transmission, based on the configuration.

5. A radio communication method for a terminal, the radio communication method comprising:
receiving indication related to an uplink (UL) transmission scheme; and
switching a transmission scheme to use, to any one of one or more single-panel UL transmission schemes and one or more multi-panel UL transmission schemes, based on the indication.

6. A base station comprising:
a transmitting section that transmits indication related to an uplink (UL) transmission scheme; and
a control section that controls, after a transmission scheme used by a terminal is switched to any one of one or more single-panel UL transmission schemes and one or more multi-panel UL transmission schemes, reception of a UL signal using the transmission scheme, based on the indication.
